# EUROPEAN PATENT SPECIFICATION

(11) **EP 3 088 284 B1**
(45) Date of publication and mention of the grant of the patent: **16.08.2017**
(21) Application number: 16167387.6
(22) Date of filing: 28.04.2016
(51) Int. Cl.: B62K 11/02, B62K 19/06, B62K 19/20, B62K 19/24

(54) **STRADDLED VEHICLE**
GRÄTSCHSITZFAHRZEUG
VÉHICULE À CALIFOURCHON

(30) Priority: 28.04.2015 JP 2015091253
(43) Date of publication of application: 02.11.2016
(73) Proprietor: Yamaha Hatsudoki Kabushiki Kaisha, Iwata-shi, Shizuoka 438-8501 (JP)
(72) Inventor: AMATRUDA, Carlo, 20855 Gerno di Lesmo (IT); SAITA, Alessandro, 20855 Gerno di Lesmo (IT)
(74) Representative: Grünecker Patent- und Rechtsanwälte PartG mbB

(56) References cited:
- EP-A1- 2 810 862
- JP-A- H02 158 481
- US-A1- 2003 132 048
- US-A1- 2008 185 209

## Description

### BACKGROUND OF THE INVENTION

The present invention relates to a straddled vehicle.

There have been known a variety of vehicle body frames for straddled vehicles (e.g., motorcycles) that are capable of traveling with the vehicle bodies thereof being tilted. For example, Japan Laid-open Patent Application Publication No. H02-158481 discloses a split-type seat frame. This split-type seat frame includes a structure splittable into a driver seat frame and a passenger seat frame. The driver seat frame is located under a main seat on which a driver is seated, whereas the passenger seat frame is located under a sub-seat on which a passenger is seated.

### SUMMARY OF THE INVENTION

In the split-type seat frame as described above, stress is likely to be concentrated on joints between the driver seat frame and the passenger seat frame. Therefore, it is required for the joints to reliably secure sufficient strength.

The vehicle body frame described in Japan Laid-open Patent Application Publication No. H02-158481 is produced by casting, and the joints are integrally molded with the vehicle body frame. Therefore, it is possible for the joints to reliably secure large strength. However, the vehicle body frame made of casting has a drawback of high manufacturing cost.

On the other hand, some vehicle body frames include a structure of pipes joined to each other by welding. The vehicle body frames thus made of pipes are advantageous in that manufacturing cost thereof is lower than that of the vehicle body frames made of casting. However, the vehicle body frames made of pipes are disadvantageous in that the joints thereof are formed by fixing the pipes by welding, and thus, it is not easy for the joints to reliably secure sufficient strength.

It is an object of the present invention to provide a structure for a straddled vehicle including a vehicle body frame made of pipes, whereby it is possible for joints of a split-type seat frame to reliably and easily secure sufficient strength.

Such an object is achieved in the straddle type vehicle according to independent claim 1. Preferred embodiments are set out in the dependent claims.

A straddled vehicle according to an aspect of the present invention includes a seat, a front seat frame, a rear seat frame, a left fastener and a right fastener. The front seat frame is disposed under the seat. The rear seat frame includes a portion disposed rearward of the front seat frame. The right and left fasteners detachably fix the rear seat frame to the front seat frame.

The front seat frame includes a left upper pipe, a right upper pipe, a left lower pipe, a right lower pipe, a left welded portion, a right welded portion, a left front joint and a right front joint. The left upper pipe is disposed under the seat. The right upper pipe is disposed under the seat. The left lower pipe is disposed under the left upper pipe. The right lower pipe is disposed under the right upper pipe. The left welded portion welds the left upper pipe and the left lower pipe. The right welded portion welds the right upper pipe and the right lower pipe. The left front joint is disposed forward of a front end of the left welded portion, and is welded to the left upper pipe and the left lower pipe. The right front joint is disposed forward of a front end of the right welded portion, and is welded to the right upper pipe and the right lower pipe.

The rear seat frame includes a left rear joint and a right rear joint. The left rear joint is joined to the left front joint. The right rear joint is joined to the right front joint. The left fastener detachably fixes the left rear joint and the left front joint. The right fastener detachably fixes the right rear joint and the right front joint.

In the straddled vehicle according to the present aspect, the left front joint can be produced in large size by utilizing the space disposed forward of the left welded portion and between the left upper pipe and the left lower pipe. Likewise, the right front joint can be produced in large size by utilizing the space disposed forward of the right welded portion and between the right upper pipe and the right lower pipe. Accordingly, the joints between the rear seat frame and the front seat frame are reliably enabled to secure large strength.

The left front joint may include a left front through hole through which the left fastener is inserted. The left rear joint may include a left rear through hole through which the left fastener is inserted. A diameter of the left front through hole may be different from a diameter of the left rear through hole. The right front joint may include a right front through hole through which the right fastener is inserted. The right rear joint may include a right rear through hole through which the right fastener is inserted. A diameter of the right front through hole may be different from a diameter of the right rear through hole.

In this case, the position of the smaller one of the through holes can be easily checked through the larger one of the through holes. Accordingly, positional alignment can be easily done in an attachment work.

An axis of the left fastener may be extending in either an up-and-down direction or a direction slanting at an angle in a range of 45 degrees or less with respect to the up-and-down direction. An axis of the right fastener may be extending in either the up-and-down direction or the direction slanting at an angle in a range of 45 degrees or less with respect to the up-and-down direction. In this case, an attachment/detachment work of the rear seat frame can be easily done, with the right and left fasteners being seen from above.

The left front through hole and the left rear through hole may be disposed on a left side of the left upper pipe and the left lower pipe in a vehicle width direction. The right front through hole and the right rear through hole may be disposed on a right side of the right upper pipe and the right lower pipe in the vehicle width direction. In this case, these through holes are more easily accessible than a construction that these through holes are disposed between the right pipes and the left pipes. Therefore, the attachment/detachment work of the rear seat frame can be more easily done.

The left fastener and the right fastener may overlap with the seat in a vehicle plan view. In this case, the left fastener and the right fastener are inaccessible unless the seat is removed. Accordingly, quality of crime prevention can be enhanced.

The front seat frame may further include a first engaging portion disposed between the left fastener and the right fastener. The rear seat frame may further include a second engaging portion. The second engaging portion is configured to position the rear seat frame with respect to the front seat frame when being engaged with the first engaging portion. Accordingly, attachment of the rear seat frame can be more easily done.

The front seat frame may further include a cross member connecting the left upper pipe and the right upper pipe. The cross member may be provided with the first engaging portion. In this case, attachment of the rear seat frame can be more easily done.

The front seat frame may include a seat lock for detachably fixing the seat to the front seat frame. The seat lock may be disposed forward of a rear end of the front seat frame. In this case, it is possible to prevent a situation that the position of the seat lock is changed in accordance with the position of the rear seat frame.

The seat may include a main seat on which a driver is seated and a passenger seat on which a passenger is seated. The passenger seat is disposed rearward of the main seat. The front seat frame may be disposed under the main seat. The rear seat frame may be disposed under the passenger seat. In this case, replacement of the passenger seat can be easily done.

The straddled vehicle may further include a rear wheel disposed under the rear seat frame and a rear fender disposed over the rear wheel. The rear fender may be attached to the rear seat frame. In this case, the rear fender can be attached/detached, unitarily with the rear seat frame, to/from the front seat frame. Workability can be thereby enhanced.

The straddled vehicle may further include a lamp disposed behind the rear seat frame. The lamp may be attached to the rear seat frame. In this case, the lamp can be attached/detached, unitarily with the rear seat frame, to/from the front seat frame. Workability can be thereby enhanced.

The rear seat frame may include a left rear pipe and a right rear pipe. The left rear joint may be attached to a front end of the left rear pipe. The right rear joint may be attached to a front end of the right rear pipe.

The front seat frame may further include a first cross member connecting the left upper pipe and the right upper pipe. The rear seat frame may further include a second cross member connecting the left rear pipe and the right rear pipe. The straddled vehicle may further include a cross member fastener detachably fixing the first cross member and the second cross member.

### BRIEF DESCRIPTION OF THE DRAWINGS

FIG. 1 is a side view of a straddled vehicle.
FIG. 2 is a side view of the straddled vehicle from which a seat is removed.
FIG. 3 is a perspective view of a front seat frame and a rear seat frame.
FIG. 4 is an exploded perspective view of the front seat frame and the rear seat frame.
FIG. 5 is a top view of the front seat frame and the rear seat frame.
FIG. 6 is a cross-sectional view of FIG. 5 taken along line VI-VI.
FIG. 7 is an enlarged plan view of a rear portion of the straddled vehicle.
FIG. 8 is an enlarged plan view of the rear portion of the straddled vehicle from which the seat is removed.
FIG. 9 is a bottom view of the seat.
FIG. 10 is a side view of the straddled vehicle from which the seat and the rear seat frame are removed.

### DETAILED DESCRIPTION OF THE PREFERRED EMBODIMENTS

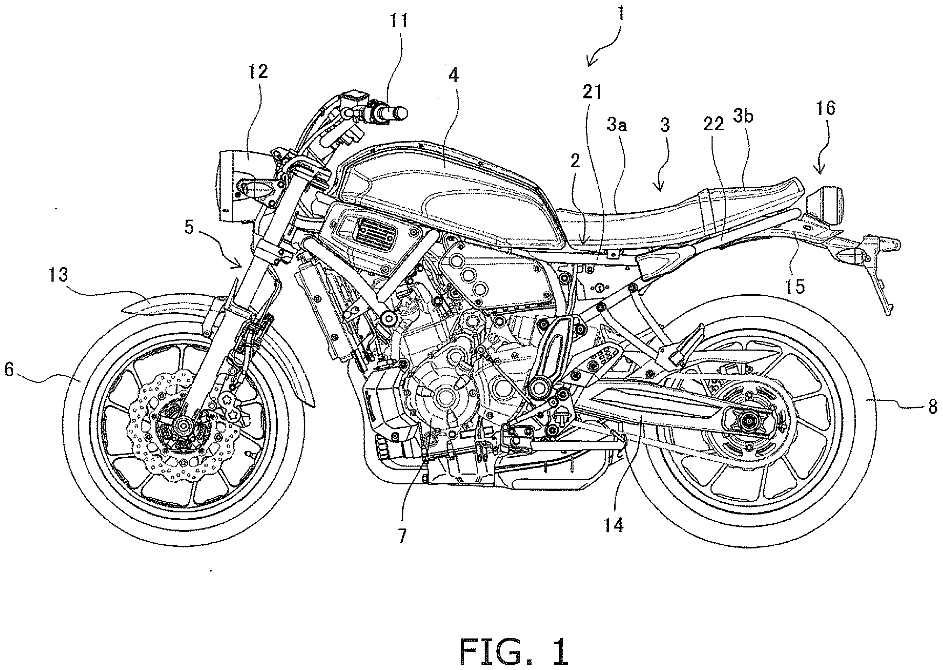

A straddled vehicle 1 according to a preferred embodiment will be hereinafter explained with reference to drawings. FIG. 1 is a side view of the straddled vehicle 1. It should be noted that in the present preferred embodiment, the terms "right" and "left" are defined as meaning right and left directions seen from a rider/riders riding on the straddled vehicle 1.

As shown in FIG. 1, the straddled vehicle 1 includes a vehicle body frame 2, a seat 3, a fuel tank 4, a steering device 5, a front wheel 6, an engine 7 and a rear wheel 8. The vehicle body frame 2 is mainly made of pipe members. The seat 3 is supported by the vehicle body frame 2. The fuel tank 4 is supported by the vehicle body frame 2. The seat 3 includes a main seat 3a on which a driver is seated and a passenger seat 3b on which a passenger is seated. The passenger seat 3b is disposed rearward of the main seat 3a. The fuel tank 4 is disposed in front of the seat 3.

The steering device 5 is disposed in front of the fuel tank 4. The steering device 5 is supported such that the steering device 5 is turnable right and left with respect to the vehicle body frame 2. A handle 11 is attached to the upper portion of the steering device 5. A headlight 12 is disposed in front of the steering device 5 and the handle 11. The front wheel 6 is rotatably supported by the lower portion of the steering device 5. A front fender 13 is disposed over the front wheel 6.

The engine 7 is supported by the vehicle body frame 2. The engine 7 is disposed under the fuel tank 4. The rear wheel 8 is disposed behind the engine 7. The rear wheel 8 is rotatably attached to a swing arm 14, and is supported by the vehicle body frame 2 through the swing arm 14. A rear fender 15 is disposed over the rear wheel 8. A lamp 16 is attached to the rear fender 15.

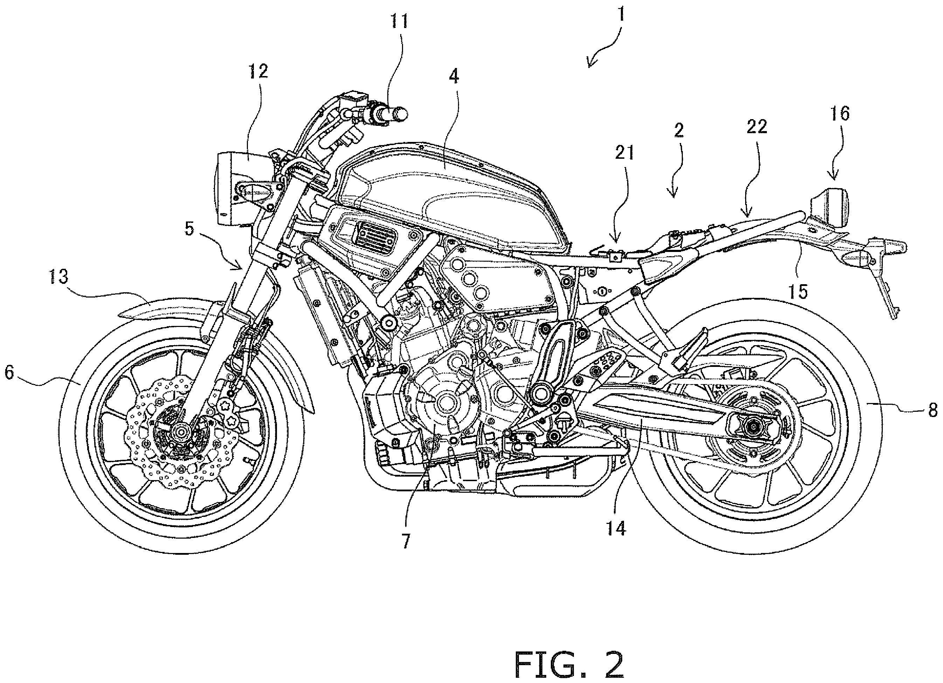

FIG. 2 is a side view of the straddled vehicle 1 from which the seat 3 is removed. As shown in FIG. 2, the vehicle body frame 2 includes a front seat frame 21 and a rear seat frame 22. The front seat frame 21 is disposed under the seat 3. When described in detail, the front seat frame 21 is disposed under the main seat 3a. The rear seat frame 22 includes a portion disposed rearward of the front seat frame 21. In other words, the rear end of the rear seat frame 22 is disposed rearward of that of the front seat frame 21. The rear seat frame 22 is disposed under the passenger seat 3b. The rear wheel 8 is disposed under the rear seat frame 22.

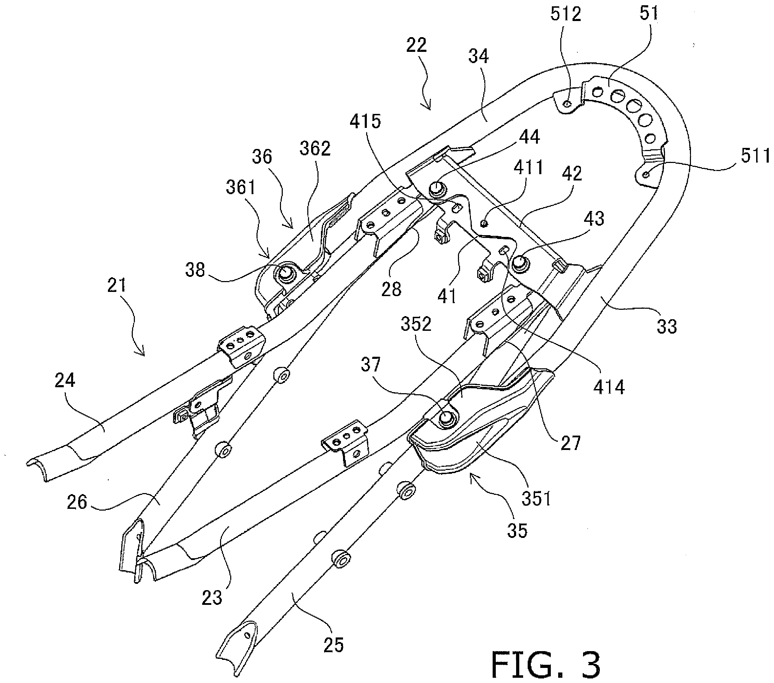

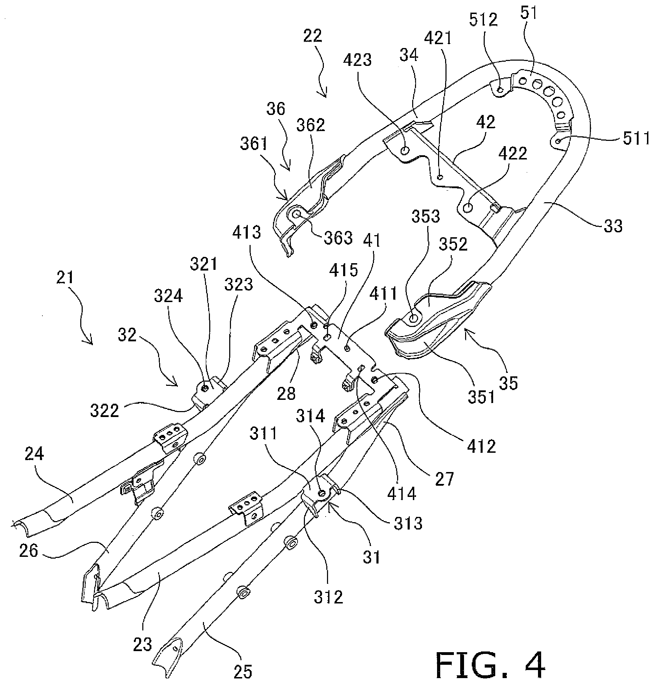

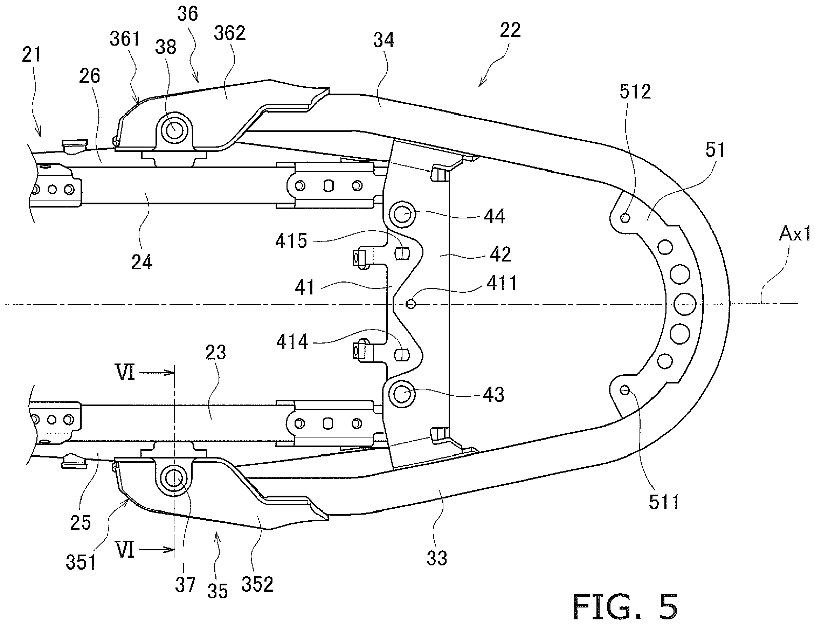

The rear seat frame 22 is a discrete component provided separately from the front seat frame 21, and is detachably attached to the front seat frame 21. FIG. 3 is a perspective view of the front seat frame 21 and the rear seat frame 22. FIG. 4 is an exploded perspective view of the front seat frame 21 and the rear seat frame 22. FIG. 5 is a top view of the front seat frame 21 and the rear seat frame 22.

The front seat frame 21 includes a left upper pipe 23, a right upper pipe 24, a left lower pipe 25 and a right lower pipe 26. The left upper pipe 23 is disposed under the seat 3. The right upper pipe 24 is disposed under the seat 3. When described in detail, the left upper pipe 23 and the right upper pipe 24 are disposed under the main seat 3a. In other words, the left upper pipe 23 and the right upper pipe 24 at least partially overlap with the main seat 3a in a vehicle plan view. As shown in FIG. 5, the left upper pipe 23 is disposed on the left side of a vehicle center line Ax1 extending in a vehicle back-and-forth direction. The right upper pipe 24 is disposed on the right side of the vehicle center line Ax1 extending in the vehicle back-and-forth direction.

The left lower pipe 25 is disposed under the left upper pipe 23. The right lower pipe 26 is disposed under the right upper pipe 24. The front seat frame 21 includes a left welded portion 27 and a right welded portion 28. The left welded portion 27 welds the left upper pipe 23 and the left lower pipe 25. The right welded portion 28 welds the right upper pipe 24 and the right lower pipe 26. When described in detail, a rear portion of the left lower pipe 25 is welded to that of the left upper pipe 23. A rear portion of the right lower pipe 26 is welded to that of the right upper pipe 24. A space between the left lower pipe 25 and the left upper pipe 23 forwardly expands in an up-and-down direction. A space between the right lower pipe 26 and the right upper pipe 24 forwardly expands in the up-and-down direction.

As shown in FIG. 4, the front seat frame 21 includes a left front joint 31 and a right front joint 32. The left front joint 31 and the right front joint 32 are portions to which the rear seat frame 22 is joined. The left front joint 31 is disposed forward of the front end of the left welded portion 27 and is welded to the left upper pipe 23 and the left lower pipe 25. The right front joint 32 is disposed forward of the front end of the right welded portion 28 and is welded to the right upper pipe 24 and the right lower pipe 26.

The left front joint 31 is disposed such that it overlaps with the space between the left lower pipe 25 and the left upper pipe 23 in a vehicle side view. The right front joint 32 is disposed such that it overlaps with the space between the right lower pipe 26 and the right upper pipe 24 in the vehicle side view.

The left front joint 31 is made of sheet metal and has an upwardly convex bent shape. When described in detail, the left front joint 31 includes a left top face 311, a first support portion 312 and a second support portion 313. The left top face 311 is disposed on the left side of the left upper pipe 23. The left top face 311 is welded to the left upper pipe 23. The first support portion 312 downwardly extends from the left top face 311. The second support portion 313 is disposed behind the first support portion 312 and downwardly extends from the left top face 311. The first support portion 312 and the second support portion 313 are welded to the left lower pipe 25.

The right front joint 32 has a shape bilaterally symmetric to the left front joint 31. The right front joint 32 is made of sheet metal and has an upwardly convex bent shape. When described in detail, the right front joint 32 includes a right top face 321, a first support portion 322 and a second support portion 323. The right top face 321 is disposed on the right side of the right upper pipe 24. The right top face 321 is welded to the right upper pipe 24. The first support portion 322 downwardly extends from the right top face 321. The second support portion 323 is disposed behind the first support portion 322 and downwardly extends from the right top face 321. The first support portion 322 and the second support portion 323 are welded to the right lower pipe 26.

As shown in FIGS. 3 to 5, the rear seat frame 22 is made of an integrated pipe curved in a U shape. When described in detail, the rear seat frame 22 includes a left rear pipe 33 and a right rear pipe 34. The left rear pipe 33 and the right rear pipe 34 are integrally formed. The left rear pipe 33 is disposed on the left side of the vehicle center line Ax1 extending in the vehicle back-and-forth direction. The right rear pipe 34 is disposed on the right side of the vehicle center line Ax1 extending in the vehicle back-and-forth direction.

The rear seat frame 22 includes a left rear joint 35 and a right rear joint 36. The left rear joint 35 is attached to the front end of the left rear pipe 33. For example, the left rear joint 35 is attached to the front end of the left rear pipe 33 by welding. The right rear joint 36 is attached to the front end of the right rear pipe 34. For example, the right rear joint 36 is attached to the front end of the right rear pipe 34 by welding. It should be noted that any suitable fixation method other than welding may be employed to attach the left rear joint 35 to the left rear pipe 33 and attach the right rear joint 36 to the right rear pipe 34.

The left rear joint 35 includes a left side cover portion 351 and a left top cover portion 352. The left side cover portion 351 covers the left front joint 31 from the left side. Additionally, the left side cover portion 351 covers the left front joint 31 from the front side. The left top cover portion 352 covers the left front joint 31 from the top side. The right rear joint 36 includes a right side cover portion 361 and a right top cover portion 362. The right side cover portion 361 covers the right front joint 32 from the right side. Additionally, the right side cover portion 361 covers the right front joint 32 from the front side. The right top cover portion 362 covers the right front joint 32 from the top side.

As shown in FIG. 4, the left front joint 31 includes a left front through hole 314. The left rear joint 35 includes a left rear through hole 353. A left fastener 37 shown in FIG. 3 is inserted through both the left front through hole 314 and the left rear through hole 353. The left rear joint 35 and the left front joint 31 are detachably fixed through the left fastener 37. It should be noted that the left fastener 37 is a bolt, for instance, but may be any suitable member other than the bolt.

As shown in FIG. 4, the right front joint 32 includes a right front through hole 324. The right rear joint 36 includes a right rear through hole 363. A right fastener 38 shown in FIG. 3 is inserted through both the right front through hole 324 and the right rear through hole 363. The right rear joint 36 and the right front joint 32 are detachably fixed through the right fastener 38. It should be noted that the right fastener 38 is a bolt, for instance, but may be any suitable member other than the bolt.

As described above, the rear seat frame 22 is detachably fixed to the front seat frame 21 by the left fastener 37 and the right fastener 38.

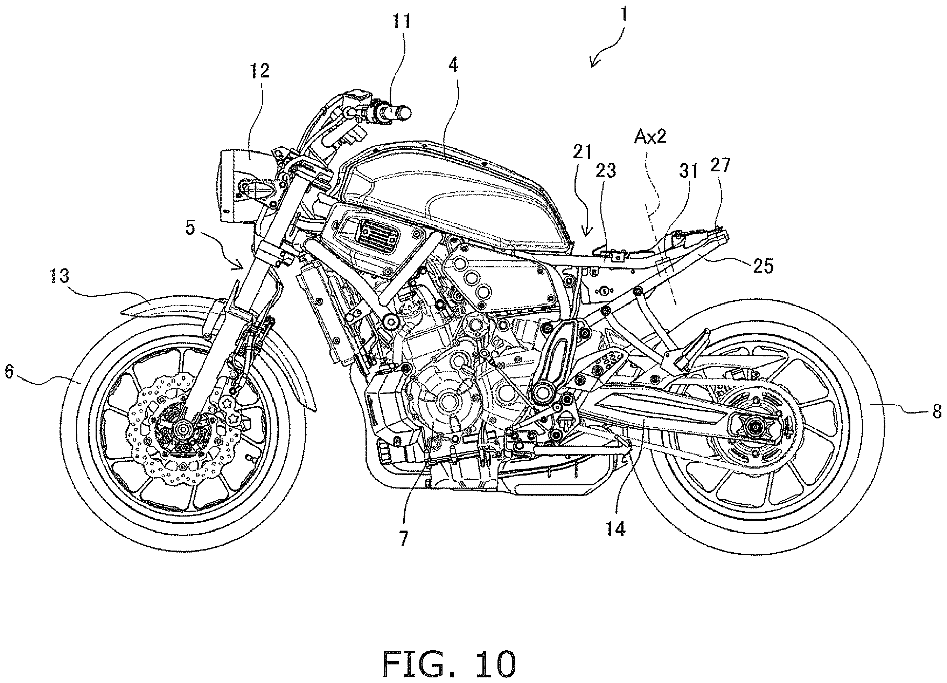

It should be noted an axis Ax2, which is the axis of the left fastener 37 (see FIG. 10), extends in a direction slanting at an angle in a range of 45 degrees or less with respect to the up-and-down direction. Likewise, the axis of the right fastener 38 extends in a direction slanting at an angle in a range of 45 degrees or less with respect to the up-and-down direction. It should be noted that the axis of the left fastener 37 may extend in the up-and-down direction. The axis of the right fastener 38 may extend in the up-and-down direction.

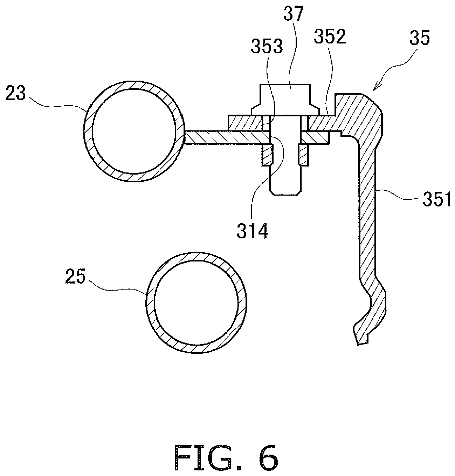

FIG. 6 is a cross-sectional view of FIG. 5 taken along line VI-VI. As shown in FIG. 6, the diameter of the left front through hole 314 is different from that of the left rear through hole 353. When described in detail, the diameter of the left rear through hole 353 is larger than that of the left front through hole 314. The left front through hole 314 and the left rear through hole 353 are disposed on the left side of the left upper pipe 23 and the left lower pipe 25 in a vehicle width (transverse) direction.

Although not shown in the drawings, the diameter of the right front through hole 324 is different from that of the right rear through hole 363. When described in detail, the diameter of the right rear through hole 363 is larger than that of the right front through hole 324. The right front through hole 324 and the right rear through hole 363 are disposed on the right side of the right upper pipe 24 and the right lower pipe 26 in the vehicle width direction.

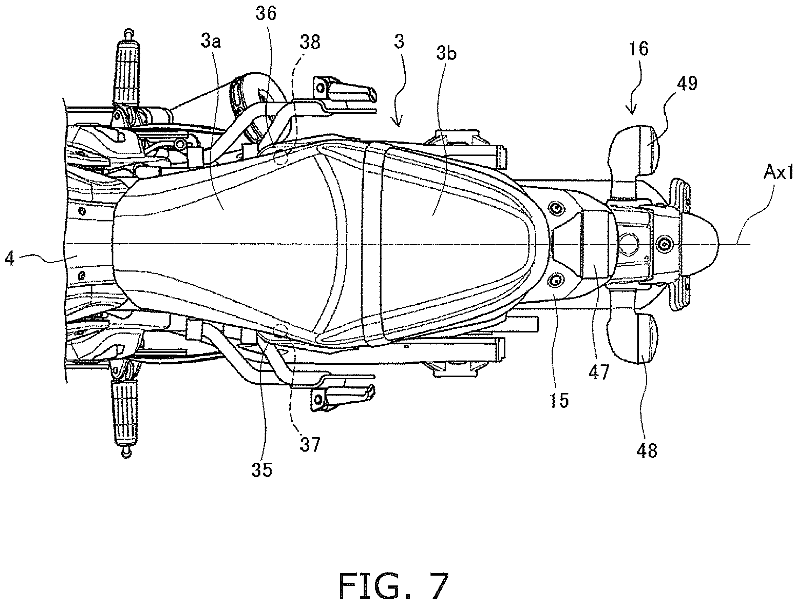

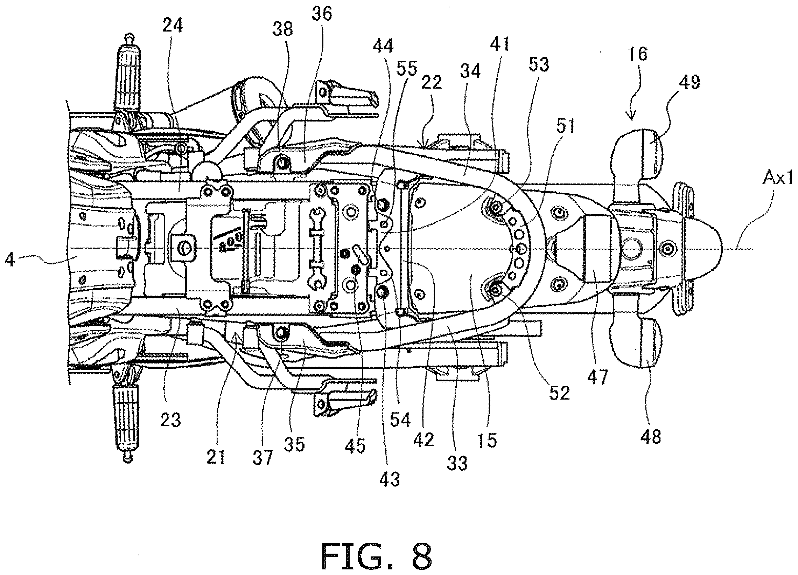

FIG. 7 is an enlarged plan view of a rear portion of the straddled vehicle 1. FIG. 8 is an enlarged plan view of the rear portion of the straddled vehicle 1 from which the seat 3 is removed. As shown in FIGS. 7 and 8, the left fastener 37 and the right fastener 38 are disposed under the seat 3, and overlap with the seat 3 in a vehicle plan view. When described in detail, the left fastener 37 and the right fastener 38 overlap with the main seat 3a in the vehicle plan view.

As shown in FIG. 4, the front seat frame 21 includes a first cross member 41 connecting the left upper pipe 23 and the right upper pipe 24. The first cross member 41 is made of sheet metal. The first cross member 41 is disposed rearward of the left front joint 31 and the right front joint 32. The first cross member 41 is connected to the rear end of the left upper pipe 23 and that of the right upper pipe 24.

The first cross member 41 is provided with a first engaging portion 411. The first engaging portion 411 has a shape of a protrusion, and upwardly protrudes from the top surface of the first cross member 41. The first engaging portion 411 is disposed between the left upper pipe 23 and the right upper pipe 24 in the right-and-left direction. The first engaging portion 411 is disposed rearward of the left front through hole 314 and the right front through hole 324. In other words, the first engaging portion 411 is disposed rearward of the left fastener 37 and the right fastener 38.

The rear seat frame 22 includes a second cross member 42 connecting the left rear pipe 33 and the right rear pipe 34. The second cross member 42 is made of sheet metal. The second cross member 42 is disposed rearward of the left rear joint 35 and the right rear joint 36.

The rear seat frame 22 includes a second engaging portion 421. The second cross member 42 is provided with the second engaging portion 421. The second engaging portion 421 is a hole bored in the second cross member 42. When the second engaging portion 421 is engaged with the first engaging portion 411, the rear seat frame 22 is positioned with respect to the front seat frame 21. In other words, when the first engaging portion 411 is inserted into the second engaging portion 421, the rear seat frame 22 is positioned with respect to the front seat frame 21.

As shown in FIGS. 3 and 5, the first cross member 41 and the second cross member 42 are detachably fixed to each other by a left-side cross member fastener 43 and a right-side cross member fastener 44. The cross member fasteners 43 and 44 are bolts, for instance, but may be any suitable members other than the bolts.

As shown in FIG. 4, the first cross member 41 includes a left-side first cross member fixing hole 412 and a right-side first cross member fixing hole 413. The left-side first cross member fixing hole 412 is disposed on the left side of the first engaging portion 411, whereas the right-side first cross member fixing hole 413 is disposed on the right side of the first engaging portion 411. The second cross member 42 includes a left-side second cross member fixing hole 422 and a right-side second cross member fixing hole 423. The left-side second cross member fixing hole 422 is disposed on the left side of the second engaging portion 421, whereas the right-side second cross member fixing hole 423 is disposed on the right side of the second engaging portion 421. The first cross member 41 and the second cross member 42 are fixed to each other when the left-side cross member fastener 43 is inserted through both the left-side first cross member fixing hole 412 and the left-side second cross member fixing hole 422 whereas the right-side cross member fastener 44 is inserted through both the right-side first cross member fixing hole 413 and the right-side second cross member fixing hole 423.

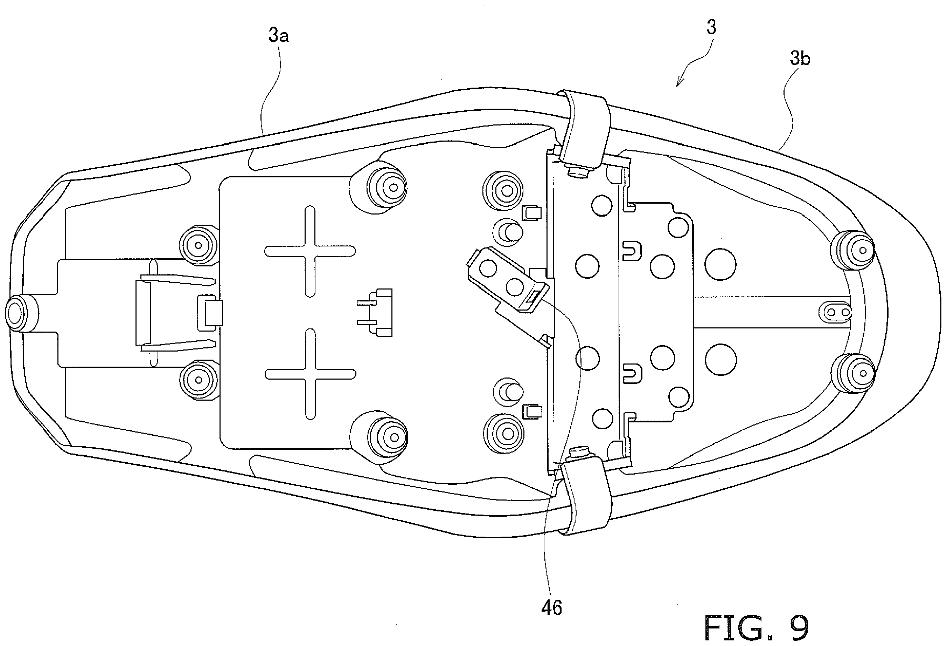

As shown in FIG. 8, the front seat frame 21 includes a seat lock latch 45. FIG. 9 is a bottom view of the seat 3. As shown in FIG. 9, a seat lock catch 46 is attached to the bottom surface of the seat 3. When the seat lock latch 45 is engaged with the seat lock catch 46, the seat 3 is detachably fixed to the front seat frame 21.

As shown in FIG. 8, the seat lock latch 45 is disposed in front of the second cross member 42. The seat lock latch 45 is also disposed in front of the first cross member 41. Therefore, the seat lock latch 45 is disposed forward of the rear end of the front seat frame 21.

The rear fender 15 is attached to the rear seat frame 22. The lamp 16 is attached to the rear fender 15, and is thus attached together with the rear fender 15 to the rear seat frame 22. The lamp 16 is disposed behind the rear seat frame 22.

When described in detail, the lamp 16 includes a taillight 47. The taillight 47 is attached to the rear fender 15. The lamp 16 includes a left flasher 48 and a right flasher 49. The left and right flashers 48 and 49 are attached to the rear fender 15.

As shown in FIG. 5, a rear fender bracket 51 is attached to the rear portion of the rear seat frame 22. The rear fender bracket 51 includes holes 511 and 512. On the other hand, the first cross member 41 includes holes 414 and 415. Although not shown in the drawings, the rear fender 15 includes holes in corresponding positions to the holes 511 and 512 of the rear fender bracket 51 and the holes 414 and 415 of the first cross member 41.

When fender fasteners 52 to 55 (e.g., bolts) shown in FIG. 8 are respectively inserted through the holes 511 and 512 of the rear fender bracket 51 and the holes 414 and 415 of the first cross member 41, the rear fender 15 is attached to the rear seat frame 22. The rear fender 15 is not attached to the front seat frame 21. Therefore, as shown in FIG. 10, when the rear seat frame 22 is detached from the front seat frame 21, the rear fender 15 and the lamp 16 can be detached unitarily with the rear seat frame 22 from the front seat frame 21.

In the straddled vehicle 1 according to the aforementioned present preferred embodiment, the left front joint 31 can be produced in large size by utilizing the space disposed forward of the left welded portion 27 and between the left upper pipe 23 and the left lower pipe 25. Likewise, the right front joint 32 can be produced in large size by utilizing the space disposed forward of the right welded portion 28 and between the right upper pipe 24 and the right lower pipe 26. Accordingly, the joints between the rear seat frame 22 and the front seat frame 21 are reliably enabled to ensure large strength.

The diameter of the left rear through hole 353 is larger than that of the left front through hole 314. Therefore, the position of the left front through hole 314 can be easily checked from above through the left rear through hole 353. Likewise, the diameter of the right rear through hole 363 is larger than that of the right front through hole 324. Therefore, the position of the right front through hole 324 can be easily checked from above through the right rear through hole 363. Accordingly, in attaching the rear seat frame 22 to the front seat frame 21, positional alignment can be easily done.

Each of the axes of the left and right fasteners 37 and 38 extends in a direction slanting at an angle in a range of 45 degrees or less with respect to the up-and-down direction. Therefore, an attachment/detachment work of the rear seat frame 22 can be easily done, with the right and left fasteners being seen from above.

The left front through hole 314 and the left rear through hole 353 are disposed on the left side of the left upper pipe 23 and the left lower pipe 25 in the vehicle width direction. On the other hand, the right front through hole 324 and the right rear through hole 363 are disposed on the right side of the right upper pipe 24 and the right lower pipe 26 in the vehicle width direction. Therefore, an attachment/detachment work of the rear seat frame 22 can be more easily done than a construction that these through holes are disposed between the right pipes and the left pipes.

When the second engaging portion 421 is engaged with the first engaging portion 411, the rear seat frame 22 can be positioned with respect to the front seat frame 21. When described in detail, firstly, the second cross member 42 of the rear seat frame 22 is overlapped on the first cross member 41 of the front seat frame 21, and the first engaging portion 411 is inserted into the second engaging portion 421. Accordingly, the rear seat frame 22 can be rotated about the first engaging portion 411. Then, the rear seat frame 22 is rotated, and thereby, the position of the left front through hole 314 and that of the left rear through hole 353 are matched, whereas the position of the right front through hole 324 and that of the right rear through hole 363 are matched. Accordingly, attachment of the rear seat frame 22 can be more easily done.

The seat lock latch 45 is disposed forward of the rear end of the front seat frame 21, and is attached to the front seat frame 21. Therefore, it is possible to prevent a situation that the position of the seat lock latch 45 is changed in accordance with the position of the rear seat frame 22.

The front seat frame 21 is disposed under the main seat 3a, whereas the rear seat frame 22 is disposed under the passenger seat 3b. Therefore, replacement of the passenger seat 3b can be easily done by detaching the rear seat frame 22 from the front seat frame 21.

The rear fender 15 and the lamp 16 are attached to the rear seat frame 22. Therefore, the rear fender 15 and the lamp 16 can be attached/detached unitarily with the rear seat frame 22 to/from the front seat frame 21. Workability can be thereby enhanced.

One preferred embodiment of the present invention has been explained above. However, the present invention is not limited to the aforementioned preferred embodiment, and a variety of changes can be made without departing from the scope of the present invention.

The straddled vehicle 1 according to the aforementioned preferred embodiment is a motorcycle of a so-called road sport type. However, the present invention may be applied to straddled vehicle s of other types. In the straddled vehicle, the number of front wheels is not limited to one, and may be two or more. Likewise, the number of rear wheels is not limited to one, and may be two or more.

The structure for detachably attaching the rear seat frame 22 to the front seat frame 21 is not limited to that of the aforementioned preferred embodiment, and may be changed. For example, the shapes or the positions of the left and right front joints 31 and 32 may be changed.

The diameter of the left front through hole 314 may be larger than that of the left rear through hole 353. The diameter of the right front through hole 324 may be larger than that of the right rear through hole 363. Alternatively, the diameter of the left front through hole 314 may be equal to that of the left rear through hole 353. The diameter of the right front through hole 324 may be equal to that of the right rear through hole 363.

The shapes or the positions of the first and second cross members 41 and 42 may be changed. Either the first cross member 41 or the second cross member 42 may not be provided.

The shapes or the positions of the first and second engaging portions 411 and 421 may be changed. Either the first engaging portion 411 or the second engaging portion 421 may not be provided.

The main seat 3a and the passenger seat 3b may not be necessarily integrated, and may be separately provided as discrete components. Alternatively, the passenger seat 3b may not be provided. The position of the seat lock latch 45 may be changed.

The rear fender 15 may be attached to a position other than the rear seat frame 22. The lamp 16 may be attached to a position other than the rear seat frame 22.

## Claims

1. A straddled vehicle (1), comprising:
a seat (3);
a front seat frame (21) disposed under the seat (3);
a rear seat frame (22) including a portion disposed rearward of the front seat frame (21); and
right and left fasteners (37, 38) detachably fixing the rear seat frame (22) to the front seat frame (21),
**characterized in that**
the front seat frame (21) includes
a left upper pipe (23) disposed under the seat (3),
a right upper pipe (24) disposed under the seat (3),
a left lower pipe (25) disposed under the left upper pipe (23),
a right lower pipe (26) disposed under the right upper pipe (24),
a left welding portion (27) for welding the left upper pipe (23) and the left lower pipe (25),
a right welding portion (28) for welding the right upper pipe (24) and the right lower pipe (26),
a left front joint (31) disposed forward of a front end of the left welding portion (27), the left front joint (31) being welded to the left upper pipe (23) and the left lower pipe (25), and
a right front joint (32) disposed forward of a front end of the right welding portion (28), the right front joint (32) being welded to the right upper pipe (24) and the right lower pipe (26),
the rear seat frame (22) includes
a left rear joint (35) joined to the left front joint (31), and
a right rear joint (36) joined to the right front joint (32),
the left fastener (37) detachably fixes the left rear joint (35) and the left front joint (31), and
the right fastener (38) detachably fixes the right rear joint (36) and the right front joint (32).

2. The straddled vehicle (1) according to claim 1, wherein
the left front joint (31) includes a left front through hole (314) through which the left fastener (37) is inserted,
the left rear joint (35) includes a left rear through hole (353) through which the left fastener (37) is inserted,
a diameter of the left front through hole (314) is different from a diameter of the left rear through hole (353),
the right front joint (32) includes a right front through hole (324) through which the right fastener (38) is inserted,
the right rear joint (36) includes a right rear through hole (363) through which the right fastener (38) is inserted, and
a diameter of the right front through hole (324) is different from a diameter of the right rear through hole (363).

3. The straddled vehicle (1) according to claim 1 or 2, wherein
an axis of the left fastener (37) is extending in either an up-and-down direction or a direction slanting at an angle in a range of 45 degrees or less with respect to the up-and-down direction, and
an axis of the right fastener (38) is extending in either the up-and-down direction or the direction slanting at an angle in a range of 45 degrees or less with respect to the up-and-down direction.

4. The straddled vehicle (1) according to claim 2 or 3, wherein
the left front through hole (314) and the left rear through hole (353) are disposed on a left side of the left upper pipe (23) and the left lower pipe (25) in a vehicle width direction, and
the right front through hole (324) and the right rear through hole (363) are disposed on a right side of the right upper pipe (24) and the right lower pipe (26) in the vehicle width direction.

5. The straddled vehicle (1) according to claim 4, wherein the left fastener (37) and the right fastener (38) overlap with the seat (3) in a vehicle plan view.

6. The straddled vehicle (1) according to any of claims 1 to 5, wherein
the front seat frame (21) further includes a first engaging portion (411) disposed between the left fastener (37) and the right fastener (38), and
the rear seat frame (22) further includes a second engaging portion (421), the second engaging portion (421) being configured to position the rear seat frame (22) with respect to the front seat frame (21) when being engaged with the first engaging portion (411).

7. The straddled vehicle (1) according to claim 6, wherein
the front seat frame (21) further includes a cross member (41, 42) connecting the left upper pipe (23) and the right upper pipe (24), and
the cross member (41, 42) is provided with the first engaging portion (411).

8. The straddled vehicle (1) according to any of claims 1 to 7, wherein
the front seat frame (21) includes a seat lock (45, 46) for detachably fixing the seat (3) to the front seat frame (21), and
the seat lock (45, 46) is disposed forward of a rear end of the front seat frame (21).

9. The straddled vehicle (1) according to any of claims 1 to 8, wherein
the seat (3) includes
a main seat (3a) for a driver, and
a passenger seat (3b) for a passenger, the passenger seat (3b) being disposed rearward of the main seat (3a),
the front seat frame (21) is disposed under the main seat (3a), and
the rear seat frame (22) is disposed under the passenger seat (3b).

10. The straddled vehicle (1) according to any of claims 1 to 9, further comprising:
a rear wheel (8) disposed under the rear seat frame (22); and
a rear fender (15) disposed over the rear wheel (8), wherein
the rear fender (15) is attached to the rear seat frame (22).

11. The straddled vehicle (1) according to any of claims 1 to 10, further comprising:
a lamp (16) disposed behind the rear seat frame (22), wherein
the lamp (16) is attached to the rear seat frame (22).

12. The straddled vehicle (1) according to any of claims 1 to 11, wherein
the rear seat frame (22) includes a left rear pipe (33) and a right rear pipe (34),
the left rear joint (35) is attached to a front end of the left rear pipe (33), and
the right rear joint (36) is attached to a front end of the right rear pipe (34).

13. The straddled vehicle (1) according to claim 12, wherein
the front seat frame (21) further includes a first cross member (41) connecting the left upper pipe (23) and the right upper pipe (24),
the rear seat frame (22) further includes a second cross member (42) connecting the left rear pipe (33) and the right rear pipe (34), and
the straddled vehicle (1) further comprises a cross member fastener (43, 44) detachably fixing the first cross member (41) and the second cross member (42).

## Patentansprüche

1. Grätschsitzfahrzeug (1), mit:
einem Sitz (3);
einem Vordersitzrahmen (21), der unter dem Sitz (3) angeordnet ist;
einen Rücksitzrahmen (22) mit einem Bereich, der hinter dem Vordersitzrahmen (21) angeordnet ist; und
einem rechten und linken Befestigungselement (37, 38), die den Rücksitzrahmen (22) lösbar an dem Vordersitzrahmen (21) halten,
**dadurch gekennzeichnet, dass**
der Vordersitzrahmen (21) aufweist
ein linkes oberes Rohr (23), das unter dem Sitz (3) angeordnet ist,
ein rechtes oberes Rohr (24), das unter dem Sitz (3) angeordnet ist,
ein linkes unteres Rohr (25), das unter dem linken oberen Rohr (23) angeordnet ist,
ein rechtes unteres Rohr (26), das unter dem rechten oberen Rohr (24) angeordnet ist,
einen linken Schweißbereich (27) zum Verschweißen des linken oberen Rohrs (23) und des linken unteren Rohrs (25),
einen rechten Schweißbereich (28) zum Verschweißen des rechten oberen Rohrs (24) und des rechten unteren Rohrs (26),
ein linkes vorderes Anschlussstück (31), das vor einem vorderen Ende des linken Schweißbereichs (27) angeordnet ist, wobei das linke vordere Anschlussstück (31) mit dem linken oberen Rohr (23) und dem linken unteren Rohr (25) verschweißt ist, und
ein rechtes vorderes Anschlussstück (32), das vor einem vorderen Ende des rechten Schweißbereichs (28) angeordnet ist, wobei das rechte vordere Anschlussstück (32) mit dem rechten oberen Rohr (24) und dem rechten unteren Rohr (26) verschweißt ist,
wobei der Rücksitzrahmen (22) aufweist
ein linkes hinteres Anschlussstück (35), das mit dem linken vorderen Anschlussstück (31) verbunden ist, und
ein rechtes hinteres Anschlussstück (36), das mit dem rechten vorderen Anschlussstück (32) verbunden ist,
wobei das linke Befestigungselement (37) das linke hintere Anschlussstück (35) und das linke vordere Anschlussstück (31) lösbar hält, und
das rechte Befestigungselement (38) das rechte hintere Anschlussstück (36) und das rechte vordere Anschlussstück (32) lösbar hält.

2. Grätschsitzfahrzeug (1) nach Anspruch 1, wobei
das linke vordere Anschlussstück (31) eine linke vordere Durchgangsbohrung (314) aufweist, durch welche das linke Befestigungselement (37) eingeführt ist,
das linke hintere Anschlussstück (35) eine linke hintere Durchgangsbohrung (353) aufweist, durch welche das linke Befestigungselement (37) eingeführt ist,
ein Durchmesser der linken vorderen Durchgangsbohrung (314) sich von einem Durchmesser der linken hinteren Durchgangsbohrung (353) unterscheidet,
das rechte vordere Anschlussstück (32) eine rechte vordere Durchgangsbohrung (324) aufweist, durch welche das rechte Befestigungselement (38) eingeführt ist,
das rechte hintere Anschlussstück (36) eine rechte hintere Durchgangsbohrung (363) aufweist, durch welche das rechte Befestigungselement (38) eingeführt ist, und
ein Durchmesser der rechten vorderen Durchgangsbohrung (324) sich von einem Durchmesser der rechten hinteren Durchgangsbohrung (363) unterscheidet.

3. Grätschsitzfahrzeug (1) nach Anspruch 1 oder 2, wobei
eine Achse des linken Befestigungselements (37) sich in einer Auf-Ab-Richtung oder einer Richtung erstreckt, die unter einem Winkel im Bereich von 45° oder kleiner in Bezug auf die Auf-Ab-Richtung geneigt ist, und
eine Achse des rechten Befestigungselements (38) sich in der Auf-Ab-Richtung oder der Richtung erstreckt, die unter einem Winkel in einem Bereich von 45° oder kleiner in Bezug auf die Auf-Ab-Richtung geneigt ist.

4. Grätschsitzfahrzeug (1) nach Anspruch 2 oder 3, wobei
die linke vordere Durchgangsbohrung (314) und die linke hintere Durchgangsbohrung (353) auf einer linken Seite des linken oberen Rohrs (23) und des linken unteren Rohrs (25) in einer Fahrzeugbreitenrichtung angeordnet sind, und
die rechte vordere Durchgangsbohrung (324) und die rechte hintere Durchgangsbohrung (363) auf einer rechten Seite des rechten oberen Rohrs (24) und des rechten unteren Rohrs (26) in einer Fahrzeugbreitenrichtung angeordnet sind.

5. Grätschsitzfahrzeug (1) nach Anspruch 4, wobei das linke Befestigungselement (37) und das rechte Befestigungselement (38) in einer Fahrzeugdraufsicht mit dem Sitz (3) überlappen.

6. Grätschsitzfahrzeug (1) nach einem der Ansprüche 1 bis 5, wobei
der Vordersitzrahmen (21) ferner einen ersten Eingriffsbereich (411) aufweist, der zwischen dem linken Befestigungselement (37) und dem rechten Befestigungselement (38) angeordnet ist, und
der Rücksitzrahmen (22) ferner einen zweiten Eingriffsbereich (421) aufweist, wobei der zweite Eingriffsbereich (421) ausgebildet ist, bei Eingriff in den ersten Eingriffsbereich (411) den Rücksitzrahmen (22) in Bezug auf den Vordersitzrahmen (21) zu positionieren.

7. Grätschsitzfahrzeug (1) nach Anspruch 6, wobei
der Vordersitzrahmen (21) ferner ein Querelement (41, 42) aufweist, das das linke obere Rohr (23) und das rechte obere Rohr (24) verbindet, und
das Querelement (41, 42) mit dem ersten Eingriffsbereich (411) versehen ist.

8. Grätschsitzfahrzeug (1) nach einem der Ansprüche 1 bis 7, wobei
der Vordersitzrahmen (21) eine Sitzverriegelung (45, 46) zum lösbaren Befestigen des Sitzes (3) an dem Vordersitzrahmen (21) aufweist, und
die Sitzverriegelung (45, 46) vor einem hinteren Ende des Vordersitzrahmens (21) angeordnet ist.

9. Grätschsitzfahrzeug (1) nach einem der Ansprüche 1 bis 8, wobei
der Sitz (3) aufweist
einen Hauptsitz (3a) für einen Fahrer, und
einen Passagiersitz (3b) für einen Passagier, wobei der Passagiersitz (3b) hinter dem Hauptsitz (3a) angeordnet ist,
wobei der Vordersitzrahmen (21) unter dem Hauptsitz (3a) angeordnet ist, und
der Rücksitzrahmen (22) unter dem Passagiersitz (3b) angeordnet ist.

10. Grätschsitzfahrzeug (1) nach einem der Ansprüche 1 bis 9, das ferner aufweist:
ein Hinterrad (8), das unter dem Rücksitzrahmen (22) angeordnet ist; und
eine Hinterradabdeckung (15), die über dem Hinterrad (8) angeordnet ist, wobei die Hinterradabdeckung (15) an dem Rücksitzrahmen (22) befestigt ist.

11. Grätschsitzfahrzeug (1) nach einem der Ansprüche 1 bis 10, das ferner aufweist:
eine Leuchte (16), die hinter dem Rücksitzrahmen (22) angeordnet ist, wobei die Leuchte (16) an dem Rücksitzrahmen (22) befestigt ist.

12. Grätschsitzfahrzeug (1) nach einem der Ansprüche 1 bis 11, wobei der Rücksitzrahmen (22) ein linkes hinteres Rohr (33) und ein rechtes hinteres Rohr (34) aufweist, wobei das linke hintere Anschlussstück (35) an einem vorderen Ende des linken hinteren Rohrs (33) befestigt ist, und das rechte hintere Anschlussstück (36) an einem vorderen Ende des rechten hinteren Rohrs (34) befestigt ist

13. Grätschsitzfahrzeug (1) nach Anspruch 12. wobei
der Vordersitzrahmen (21) ferner ein erstes Querelement (41) aufweist, das das linke obere Rohr (23) und das rechte obere Rohr (24) verbindet,
der Rücksitzrahmen (22) ferner ein zweites Querelement (42) aufweist, das das linke hintere Rohr (33) und des rechte hintere Rohr (34) verbindet, und
das Grätschsitzfahrzeug (1) ferner eine Querelementbefestigung (43, 44) aufweist, die das erste Querelement (41) und das zweite Querelement (42) lösbar hält.

## Revendications

1. Véhicule à enfourcher (1) comprenant :
un siège (3) ;
un cadre de siège avant (21) agencé sous le siège (3) ;
un cadre de siège arrière (22) incluant une portion agencée à l'arrière du cadre de siège avant (21) ; et
des attaches droite et gauche (37, 38) qui fixent le cadre de siège arrière (22) au cadre de siège avant (21) de manière amovible,
**caractérisé en ce que**
le cadre de siège avant (21) comprend
un tube supérieur gauche (23) agencé sous le siège (3),
un tube supérieur droit (24) agencé sous le siège (3),
un tube inférieur gauche (25) agencé sous le tube supérieur gauche (23),
un tube inférieur droit (26) agencé sous le tube supérieur droit (24),
une portion de soudage gauche (27) pour souder le tube supérieur gauche (23) et le tube inférieur gauche (25),
une portion de soudage droite (28) pour souder le tube supérieur droit (24) et le tube inférieur droit (26),
un raccord avant gauche (31) agencé devant une extrémité avant de la portion de soudage gauche (27), le raccord avant gauche (31) étant soudé au tube supérieur gauche (23) et au tube inférieur gauche (25), et
un raccord avant droit (32) agencé devant une extrémité avant de la portion de soudage droite (28), le raccord avant droit (32) étant soudé au tube supérieur droit (24) et au tube inférieur droit (26), le cadre de siège arrière (22) comprend
un raccord arrière gauche (35) rattaché au raccord avant gauche (31), et
un raccord arrière droit (36) rattaché au raccord avant droit (32),
l'attache gauche (37) fixe le raccord arrière gauche (35) et le raccord avant gauche (31) de manière amovible, et
l'attache droite (38) fixe le raccord arrière droit (36) et le raccord avant droit (32) de manière amovible.

2. Véhicule à enfourcher (1) selon la revendication 1, dans lequel
le raccord avant gauche (31) comprend un trou traversant avant gauche (314) à travers lequel est insérée l'attache gauche (37),
le raccord arrière gauche (35) comprend un trou traversant arrière gauche (353) à travers lequel est insérée l'attache gauche (37),
un diamètre du trou traversant avant gauche (314) est différent d'un diamètre du trou traversant arrière gauche (353),
le raccord avant droit (32) comprend un trou traversant avant droit (324) à travers lequel est insérée l'attache droite (38),
le raccord arrière droit (36) comprend un trou traversant arrière droit (363) à travers lequel est insérée l'attache droite (38),
un diamètre du trou traversant avant droit (324) est différent d'un diamètre du trou traversant arrière droit (363).

3. Véhicule à enfourcher (1) selon la revendication 1 ou 2, dans lequel
un axe de l'attache gauche (37) s'étend soit en direction haut-bas, soit en direction oblique selon un angle inférieur ou égal à 45 degrés par rapport à la direction haut-bas, et
un axe de l'attache droite (38) s'étend soit en direction haut-bas, soit en direction oblique selon un angle inférieur ou égal à 45 degrés par rapport à la direction haut-bas.

4. Véhicule à enfourcher (1) selon la revendication 2 ou 3, dans lequel
le trou traversant avant gauche (314) et le trou traversant arrière gauche (353) sont agencés sur un côté gauche du tube supérieur gauche (23) et du tube inférieur gauche (25) en direction de la largeur du véhicule, et
le trou traversant avant droit (324) et le trou traversant arrière droit (363) sont agencés sur un côté droit du tube supérieur droit (24) et du tube inférieur droit (26) en direction de la largeur du véhicule.

5. Véhicule à enfourcher (1) selon la revendication 4, dans lequel l'attache gauche (37) et l'attache droite (38) se chevauchent avec le siège (3) dans une vue en plan du véhicule.

6. Véhicule à enfourcher (1) selon l'une quelconque des revendications 1 à 5, dans lequel
le cadre de siège avant (21) comprend en outre une première portion d'engagement (411) agencée entre l'attache gauche (37) et l'attache droite (38), et
le cadre de siège arrière (22) comprend en outre une deuxième portion d'engagement (421), la deuxième portion d'engagement (421) étant configurée pour positionner le cadre de siège arrière (22) par rapport au cadre de siège avant (21) lorsqu'elle est engagée avec la première portion d'engagement (411).

7. Véhicule à enfourcher (1) selon la revendication 6, dans lequel
le cadre de siège avant (21) comprend en outre un élément d'entretoise (41, 42) connectant le tube supérieur gauche (23) et le tube supérieur droit (24), et
l'élément d'entretoise (41, 42) est pourvu de la première portion d'engagement (411).

8. Véhicule à enfourcher (1) selon l'une quelconque des revendications 1 à 7, dans lequel
le cadre de siège avant (21) comprend un verrou de siège (45, 46) pour fixer le siège (3) de manière amovible au cadre de siège avant (21), et
le verrou de siège (45, 46) est agencé devant une extrémité arrière du cadre de siège avant (21).

9. Véhicule à enfourcher (1) selon l'une quelconque des revendications 1 à 8, dans lequel
le siège (3) comprend
un siège principal (3a) pour un conducteur, et
un siège passager (3b) pour un passager, le siège passager (3b) étant agencé derrière le siège principal (3a),
le cadre de siège avant (21) est agencé sous le siège principal (3a), et
le cadre de siège arrière (22) est agencé sous le siège passager (3b).

10. Véhicule à enfourcher (1) selon l'une quelconque des revendications 1 à 9, comprenant en outre :
une roue arrière (8) agencée sous le cadre de siège arrière (22) ; et
un garde-boue arrière (15) agencé par dessus la roue arrière (8), dans lequel
le garde-boue arrière (15) est attaché au cadre de siège arrière (22).

11. Véhicule à enfourcher (1) selon l'une quelconque des revendications 1 à 10, comprenant en outre :
un feu (16) agencé derrière le cadre de siège arrière (22), dans lequel
le feu (16) est attaché au cadre de siège arrière (22).

12. Véhicule à enfourcher (1) selon l'une quelconque des revendications 1 à 11, dans lequel
le cadre de siège arrière (22) comprend un tube arrière gauche (33) et un tube arrière droit (34),
le raccord arrière gauche (35) est attaché à une extrémité avant du tube arrière gauche (33), et
le raccord arrière droit (36) est attaché à une extrémité avant du tube arrière droit (34).

13. Véhicule à enfourcher (1) selon la revendication 12, dans lequel
le cadre de siège avant (21) comprend en outre un premier élément d'entretoise (41) connectant le tube supérieur gauche (23) et le tube supérieur droit (24),
le cadre de siège arrière (22) comprend en outre un deuxième élément d'entretoise (42) connectant le tube arrière gauche (33) et le tube arrière droit (34), et
le véhicule à enfourcher (1) comprend en outre une attache d'élément d'entretoise (43, 44) qui fixe le premier élément d'entretoise (41) et le deuxième élément d'entretoise (42) de manière amovible.
